# EUROPÄISCHE PATENTSCHRIFT

(11) **EP 2 371 623 B1**
(45) Veröffentlichungstag und Bekanntmachung des Hinweises auf die Patenterteilung: **20.09.2017**
(21) Anmeldenummer: 11001843.9
(22) Anmeldetag: 05.03.2011
(51) Int. Cl.: B60Q 1/00, F21S 8/10, F21S 8/12, G02B 27/09

(54) **Flächiger Lichtleiter zur Strahlkollimierung**
Laminar optical fibre for collimation of a beam
Conducteur lumineux plat pour la collimation d'un faisceau

(30) Priorität: 25.03.2010 DE 102010012634
(43) Veröffentlichungstag der Anmeldung: 05.10.2011
(73) Patentinhaber: Automotive Lighting Reutlingen GmbH, 72762 Reutlingen (DE)
(72) Erfinder: Zwick, Hubert, 70173 Stuttgart (DE)
(74) Vertreter: DREISS Patentanwälte PartG mbB

(56) Entgegenhaltungen:
- WO-A1-2005/096096
- WO-A1-2006/033029
- WO-A1-2006/033030
- WO-A1-2007/036207

## Beschreibung

Die vorliegende Erfindung betrifft einen flächigen Lichtleiter nach dem Oberbegriff des Anspruchs 1.

Ein solcher flächiger Lichtleiter ist aus der WO 2005/096096 A1 bekannt.

Es ist in vielen Fällen erwünscht, dass sich das Licht im Lichtleiter parallel zu Transportflächen des Lichtleiters, an denen eine Totalreflexion stattfindet, ausbreitet. Wesentlich ist dabei insbesondere, dass der Grad der Parallelität der Lichtausbreitung die stärkste Krümmung des Lichtleiters bestimmt, bei der gerade noch kein Licht an Lichtleiters bestimmt, bei der gerade noch kein Licht an den Transportflächen austritt, und dass der Grad der Parallelität die Öffnung des Bündels definiert, das nach Austritt des Lichts aus dem Lichtleiter vorliegt.

Bei der Verwendung von flächigen Lichtleitern ergibt sich allein durch die Breite des Lichtleiterquerschnitts eine Verringerung von Effekten parallelisierend wirkender Reflexionen an den Transportwänden. Es ist daher erforderlich, zusätzlich parallelisierend wirkende Effekte zu nutzen.

Die brechende Austrittsfläche zur Fokussierung zu nutzen ist in der Regel nicht möglich, da ein Punkt auf der Austrittsfläche von Strahlen unterschiedlichster Richtung getroffen werden kann. Eine über die Form der Eintrittsflächen erfolgende Parallelisierung geht mit dem Nachteil einher, dass sie mit einem Lichtverlust verbunden ist.

Eine parallele Einstrahlung lässt sich durch konvergierende Vorsatzoptiken erzielen, die zwischen Lichtquelle und Lichtleiter anzuordnen wären. Die mit dieser Lösung verbundenen höheren Kosten sind natürlich unerwünscht.

Vor diesem Hintergrund besteht die Aufgabe der Erfindung in der Angabe eines flächigen Lichtleiters der eingangs genannten Art, der eine Parallelisierung des Lichtes innerhalb des flächigen Lichtleiters bewirkt und der sich problem los durch spritzgießen herstellen lässt.

Diese Aufgabe wird mit den Merkmalen des Anspruchs 1 gelöst. Der erfindungsgemäße flächige Lichtleiter zeichnet sich dadurch aus, dass Flächen von parallel zur Lichteintrittsfläche angeordneten Querschnitten des flächigen Lichtleiters mit zunehmendem Abstand von der Lichteintrittsfläche größer werden. Dadurch wird eine parallelisierende Wirkung der an den zugehörigen Wänden des Lichtleiters auftretenden Totalreflexionen erzielt.

Dadurch, dass die Lichteintrittsfläche keine Einkerbungen zwischen den Teilflächen aufweist, bei denen Flächen in einem Winkel aufeinander stoßen, der kleiner als 90° ist, kann der flächige Lichtleiter durch Spritzgießen hergestellt werden. Das ist aus den folgenden Gründen nicht selbstverständlich:

Wenn man eine einzelne Halbleiterlichtquelle betrachtet, kann man einen spitz auf die einzelne Halbleiterlichtquelle zulaufenden Lichtleiterquerschnitt zur Parallelisierung verwenden, der sich von der Halbleiterlichtquelle ausgehend erweitert. Bei flächigen Lichtleitern der eingangs genannten Art ergeben sich dabei aber fertigungstechnische Probleme. Die jeder Halbleiterlichtquelle zugeordneten, sich erweiternden Querschnitte führen dazu, dass der flächige Halbleiter insgesamt über mehrere, stückweise voneinander getrennte Lichtleiterabschnitte an die Halbleiterlichtquellen angekoppelt ist. Die geforderten Licht-technischen Eigenschaften werden dabei problemlos erfüllt, wenn diese Lichtleiterabschnitte die Form von langen, spitz zulaufenden Stegen haben.

Dabei durchdringen sich die spitz auf benachbarte Halbleiterlichtquellen zulaufenden Lichtleiterquerschnitte gewissermaßen gegenseitig, was im Ergebnis dazu führt, dass die stückweise voneinander getrennten Lichtleiterabschnitte in einem spitzen Winkel aufeinander treffen, beziehungsweise ineinander übergehen. Dabei treten in der Lichteintrittsfläche, beziehungsweise in der Fläche des flächigen Lichtleiters, in der die Licht einkoppelnden Teilflächen liegen, Einkerbungen auf, die den ebenen Zusammenhang der Lichteintrittsfläche unterbrechen. Diese Einkerbungen schneiden tief in das Volumen des flächigen Lichtleiters ein, sind entsprechend spitzwinklig, und führen bei einer durch Spritzgießen erfolgenden Herstellung des flächigen Lichtleiters sowohl zu werkzeugtechnischen Problemen als auch zu Fließproblemen bei der Werkzeugfüllung.

Die Erfindung vermeidet diese Problem durch die Bedingung, dass die Lichteintrittsfläche keine Einkerbungen zwischen den Teilflächen aufweist, bei denen Flächen in einem Winkel aufeinander stoßen, der kleiner als 90° ist. Dadurch wird der flächige Lichtleiter einer kostengünstigen Herstellung durch Spritzgießen zugänglich. Durch den Verzicht auf spitzwinklige Einkerbungen kommt es zwar zu einem gewissen Verlust bei der Wirksamkeit der Parallelisierung, da Lichtstrahlen, die unter bestimmten Winkeln in den flächigen Lichtleiter eintreten, keine oder zumindest weniger parallelisierend wirkende Totalreflexionen erfahren. Der Erfinder hat jedoch erkannt, dass dieser Nachteil bei weitem durch den genannten Vorteil überwogen wird.

Die kostengünstige Herstellung und die trotz einer nicht ganz optimalen Parallelisierung erzielte Parallelisierung eröffnet viele Verwendungsmöglichkeiten bei Kraftfahrzeugbeleuchtungseinrichtungen. Solche flächigen Lichtleiter werden in diese Umfeld für die Erzeugung leuchtender Flächen, sogenannter Lichtvorhänge, verwendet. Darüber hinaus werden flächige Lichtleiter zur Erzeugung virtueller Lichtquellen verwendet. Aus flächigen Lichtleitern lässt sich Licht lokal durch speziell angeordnete Auskoppelelemente auskoppeln. Dabei sind die Auskoppelelemente so ausgestaltet, dass die Bedingungen für die Totalreflektion durch die Auskoppelelemente lokal nicht erfüllt werden. Als Folge wird an dieser Stelle Licht Stelle aus dem Lichtleiter ausgekoppelt. Beispiele solcher Auskoppelelemente besitzen eine Prismenform, die als Positive aus der Lichtaustrittsfläche herausragen oder als Negative in Form von in das Volumen des Lichtleiters hineinragende Ausnehmungen realisiert sind. Jedes Auskoppelelement wirkt bei der Betrachtung wie eine separate Lichtquelle und wird daher als virtuelle Lichtquelle bezeichnet.

Enge Strahlenbündel des aus dem flächigen Lichtleiter ausgekoppelten Lichtes erlauben eine Verkleinerung von damit beleuchteten Reflektoren, was in der Folge eine Erhöhung der Anzahl der Lichtauskoppelelemente und der Reflektoren ermöglicht und damit zu einer Erhöhung des Anteils an dem Licht der Halbleiterlichtquellen führt, das letztlich zu der gewünschten Lichtverteilung beiträgt.

Parallel in einem flächigen Lichtleiter propagierendes Licht erlaubt ferner eine Verwendung von direkt auskoppelnden Elementen, mit denen das austretende Bündel der gesetzlich vorgegebenen Lichtverteilung angenähert werden kann.

Dabei wird unter einem direkt auskoppelndem Element ein Auskoppelelement verstanden, das vom Inneren des Lichtleiters auf eine Grenzfläche des Auskoppelelements einfallendes Licht direkt und damit ohne Umweg über weitere Reflektionen an zusätzlichen Reflektoren oder dergleichen aus dem Lichtleiter auskoppelt.

Dies hat den Vorteil, dass die für diesen Zweck aufzuwendende Lichtleistung verringert werden kann. Vorteilhaft ist auch, dass Lichtleiter mit Auskoppelsägezahn und Lichtaustritt auf der gegenüberliegenden Seite verwendet werden können, ohne dass der Sägezahn, der aus einer Vielzahl kleiner ebener Spiegel besteht, die Verteilung der Richtungen der Strahlen im Lichtleiter verändert. Der Sägezahn verändert lediglich die Richtung aller Strahlen. Sieht man also von den Verlusten aufgrund der Unterschreitung des Grenzwinkels der Totalreflexion ab, koppelt jedes Spiegelchen dieselbe Lichtverteilung aus, die auch am Ende des Lichtleiters austritt. Da auf jeden Spiegel eine geringere Winkelverteilung auftritt, wird der Verlust bei der Spiegelung vermindert.

Ein weiterer Vorteil der Erfindung ergibt sich daraus, dass parallelisierte Strahlen einen vergleichsweise kürzeren Weg im Lichtleiter zurücklegen und daher vergleichsweise schwächer absorbiert werden. Das hat die erwünschte Folge, dass damit auch Farbveränderungen des Lichts entlang des Lichtleiters, die durch Wellenlängen-abhängige Absorption verursacht werden, verringert werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente.
Es zeigen, jeweils in schematischer Form:
- Fig. 1: eine Anordnung einer Einkoppelfläche eines Lichtleiters und einer Licht einkoppelnden Halbleiterlichtquelle;
- Fig. 2: eine der Figur 1 vergleichbare Anordnung mit einer anders geformten Einkoppelfläche;
- Fig. 3: eine Anordnung zur Parallelisierung von innerhalb eines Lichtleiters propagierendem Licht;
- Fig. 4: einen flächigen Lichtleiter;
- Fig. 5: einen flächiger Lichtleiter mit separaten Einkoppelbereichen für mehrere Halbleiterlichtquellen;
- Fi. 6: Einzelheiten eines ersten Ausführungsbeispiels eines erfindungsgemäßen flächigen Lichtleiters;
- Fig. 7: den flächigen Lichtleiter aus Fig. 6 mit senkrechtem Blick auf deren Lichteintrittsfläche;
- Fig. 8: den flächigen Lichtleiter aus Fig. 6 in leicht geneigter Form;
- Fig. 9: eine Draufsicht auf den flächigen Lichtleiter aus der Fig. 6;
- Fig. 10: eine Lichtverteilung ohne fokussierende Parallelisierung;
- Fig. 11: eine Lichtverteilung mit einer fokussierenden Parallelisierung;
- Fig. 12: eine in einem erfindungsgemäßen flächiger Lichtleiter auftretende Lichtverteilung;
- Fig. 13: eine Lichtverteilung mit einer fokussierenden Parallelisierung gemäß einem weiteren Ausführungsbeispiel eines erfindungsgemäßen flächigen Lichtleiters;
- Fig. 14: das weitere Ausführungsbeispiel, das die Lichtverteilung der Fig. 13 erzeugt;

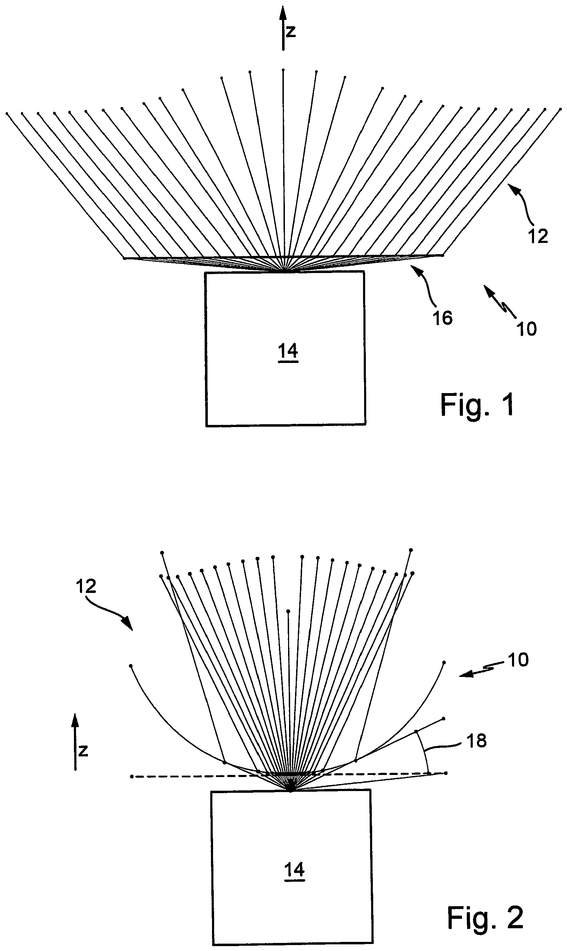

Im Einzelnen zeigt die Figur 1 die Einkoppelfläche 10 eines Lichtleiters 12 und ein von einer benachbarten Halbleiterlichtquelle 14 abgestrahltes Lichtbündel 16, dass an dieser Einkoppelfläche gebrochen wird. Die Größenverhältnisse sind so gewählt, wie sie bei einer konkreten Anwendung auftreten könnten. Das heißt, die Halbleiterlichtquelle 14 ist ein Würfel mit einer Kantenlänge von 1mm. Losgelöst von dieser auf eine spezielle Ausgestaltung bezogenen Maßangabe wird in dieser Anmeldung unter einer Halbleiterlichtquelle insbesondere eine Leuchtdiode oder eine Anordnung von Leuchtdioden verstanden. Der Abstand zwischen der Halbleiterlichtquelle 14 und der Einkoppelfläche 10 beträgt 0,2mm, und die Einkoppelfläche 10 ist ein Quadrat mit einer Kantenlänge von 2mm. Die im Folgenden angegebenen Werte beziehen sich auf das Beispiel einer Verwendung von PC (Polycarbonat) als Lichtleitermaterial. Es versteht sich aber, dass anstelle von Polycarbonat auch jedes andere transparente Material wie Glas oder Polymethylmethacrylat verwendet werden kann. Für den Brechungsindex n = 1,586 von PC liegt der Grenzwinkel der Totalreflexion bei 39,1°. Der Lichtleiter 12 soll das Licht senkrecht zur Einkoppelfläche 10 transportieren, was im Folgenden auch als z-Richtung bezeichnet wird. In der Figur 1 verläuft die z-Richtung von unten nach oben.

Bei dieser Anordnung tritt das Problem auf, dass sich ein großer Anteil des eingestrahlten Lichts nach der Brechung an der Einkoppelfläche 10 unter einem großen Winkel zu dieser Sollrichtung (z-Richtung) ausbreitet.

An sich ist jedoch eine möglichst weitgehende Parallelität der Lichtausbreitung im Lichtleiter erwünscht, da diese Parallelität im Lichtleiter die stärkste Krümmung des Lichtleiters bestimmt, bei der gerade noch kein Licht austritt. Darüber hinaus definiert es die Öffnung des Bündels, das nach Austritt des Lichts aus dem Lichtleiter vorliegt. Eine brechende Austrittsfläche des Lichtleiters 12 zur Fokussierung zu nutzen ist in der Regel nicht möglich, da ein Punkt auf der Austrittsfläche von Strahlen unterschiedlichster Richtung getroffen werden kann. Das bedeutet, dass Licht möglichst parallel eingestrahlt oder im Lichtleiter parallelisiert werden muss.

Figur 2 zeigt eine der Figur 1 vergleichbare Anordnung, wobei die ebene Einkoppelfläche 10 der Fig. 1 durch eine Kugel-förmige Einkoppelfläche 10 ersetzt worden ist. Die Strahlen verlaufen beim Gegenstand der Fig. 2 deutlich paralleler zur z-Richtung als beim Gegenstand der Fig 1. Unerwünscht ist jedoch der Umstand, dass eine beträchtliche Anzahl von Strahlen in den eingezeichneten Verlustwinkelbereich 18 fällt und damit nicht mehr in den Lichtleiter 12 eingekoppelt werden kann. Dies wird auch nicht durch einen dickeren Lichtleiter kompensiert, da der Verlustbereich durch den Strahl, der tangential auf die Kugel fällt, definiert ist. Dieser Effekt ist weder durch Verwendung eines anderen Kugelradius noch durch Verwendung anderer Flächen (Ellipsoide, Freiformflächen...) zu vermeiden. Negativ ist auch die Tatsache, dass eine geringe horizontale Verschiebung der Lichtquelle sowohl einen starken Einfluss auf die Richtungen der Strahlen im Lichtleiter 12 nimmt, als auch eine Vergrößerung der Entfernung mit einhergehendem Lichtverlust bewirkt. Man kann also zusammenfassen, dass eine über die Eintrittsflächen erfolgende Form der Parallelisierung mit einem Lichtverlust verbunden ist.

Im Folgenden wird wieder auf die Figur 1 Bezug genommen: Ein Strahl, der vor der Brechung einen Winkel von 45° mit der z-Richtung einschließt, schließt nach der der Brechung einen Winkel von 26,5° mit dieser Richtung ein. Im Folgenden beziehen sich alle Winkelangaben auf die z-Richtung, wenn nicht explizit eine andere Bezugsrichtung angegeben wird. Der größte Eintrittswinkel in Figur 1 beträgt 84,3°, der zugehörige Brechungswinkel beträgt 38,9°. Ein sogenanntes inneres Bündel, das innerhalb eines 45°-Kegels des von der Halbleiterlichtquelle 14 abgestrahlten Lichtes 16 liegt, hat vor der Brechung eine Öffnung von 45°-0°= 45°, und nach der Brechung hat es eine Öffnung von 26,5°-0°= 26,5°. Das entsprechend komplementäre äußere Bündel hat vor der Brechung eine Öffnung von 84,3°-45°= 39,3°, und nach der Brechung hat es einen Öffnungswinkel von 39,1°-26,5°= 12,6°. Der Winkel von 45°, der das äußere vom inneren Bündel trennt, kann beispielsweise durch die Forderung bedingt sein, dass das gesamte Bündel nach dem Austritt aus dem Lichtleiter 12 eine Öffnung von maximal 45° aufweisen soll. Das bedeutet, dass alle Strahlen im Lichtleiter 12 Winkel zur z-Richtung aufweisen müssen, die kleiner oder gleich 26,5° sind.

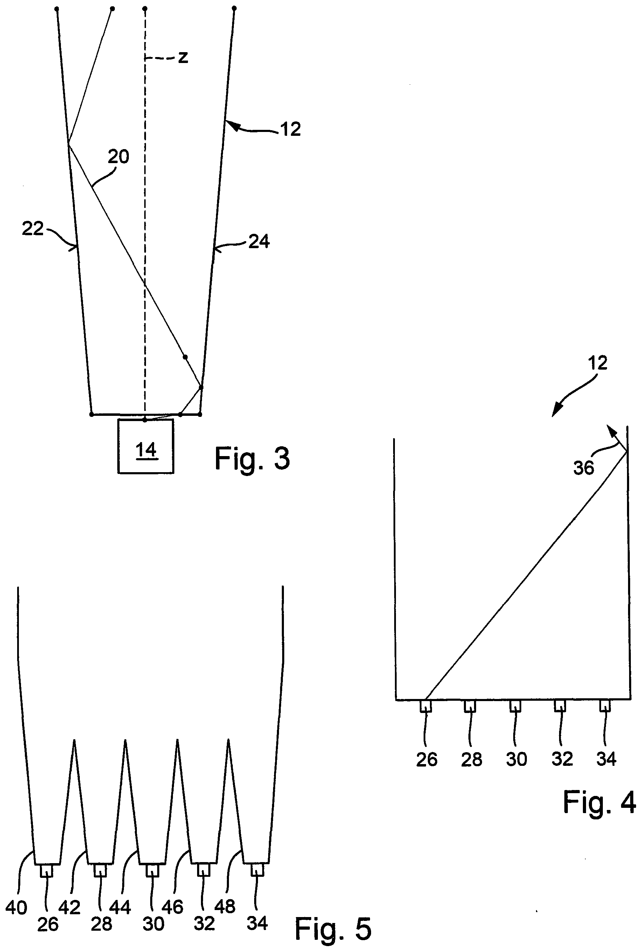

Figur 3 zeigt eine Anordnung, die genau dies leisten kann. Dabei entsprechen die Halbleiterlichtquelle 14 und die (ebene) Einkoppelfläche 10 dem Gegenstand der Fig. 1. Figur 3 zeigt zusätzlich in gestrichelter Form die z-Richtung und einen Strahl 20, der zweimal an gleich geneigten (Winkel α) Transportflächen 22, 24 des Lichtleiters 12 gespiegelt wird. Bei jeder Spiegelung verringert sich der Winkel zwischen dem Strahl und der z-Richtung um 2 α.

Damit kann auf einfache Weise die für eine Parallelisierung erforderliche Neigung der Transportflächen 22, 24 und die Länge des geneigten Bereichs bestimmt werden: Der größte Winkel zwischen dem Strahl 20 und der z-Richtung beträgt 38,9° und soll auf 26,5° begrenzt werden. Die halbe Differenz zwischen diesen Winkeln beträgt 12,4° : 2, also 6,2°. Neigt man die Flächen 22, 24 des Lichtleiters 12 also um diesen Winkel, ist sichergestellt, dass jeder Strahl, der diese Fläche trifft, anschließend einen Winkel zur z-Richtung von maximal 26,5° aufweist. Neigt man die Fläche um 3,1°, muss die angestellte Fläche in z-Richtung so lang gewählt werden, dass die Strahlen 2 mal an dieser reflektiert werden. Diese Methode hat den nicht gravierenden Nachteil, dass der Lichtleiter etwas dicker gestaltet werden muss. Die erfasste Lichtmenge wird jedoch nicht verringert und das System ist gegen eine Horizontalbewegung der Leuchtdioden wenig empfindlich.

Wenn ein Lichtleiter 12 dagegen, wie es in der Fig. 4 dargestellt ist, flächig ausgebildet ist und das Licht mehrerer Halbleiterlichtquellen 26, 28, 30, 32, 34 eingekoppelt und anschließend parallelisiert werden soll, ist das unter Bezug auf die Figur 3 erläuterte Verfahren nur eingeschränkt verwendbar, da Lichtstrahlen 36 teilweise beträchtliche Wege in z-Richtung zurücklegen müssten, bis sie auf eine Außenwand treffen.
Ordnet man jeder Halbleiterlichtquelle 26 - 34 dagegen einen separaten, abgeschrägten Einkoppelbereich 40, 42, 44, 46, 48 zu, wie er in der Figur 5 gezeigt ist, ergeben sich bei einer Herstellung durch Spritzgießen sowohl werkzeugtechnische Probleme durch die langen, spitz zulaufenden Stege, insbesondere dann, wenn senkrecht zur Zeichnungsebene ebenfalls Schrägen vorhanden sind, als auch Fließprobleme bei der Werkzeugfüllung. Aus diesen Gründen wird diese naheliegende Lösung vermutlich nicht genutzt.

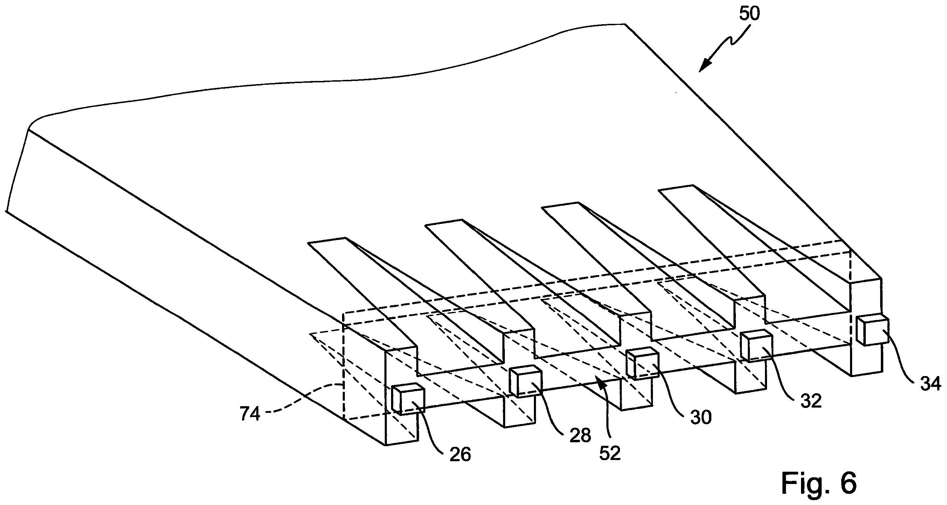

Figur 6 zeigt Einzelheiten eines ersten Ausführungsbeispiels eines erfindungsgemäßen flächigen Lichtleiters 50 zusammen mit fünf Halbleiterlichtquellen 26 bis 34 in einer perspektivischen Darstellung. Es versteht sich, dass die Zahl der Halbleiterlichtquellen auch größer oder kleiner als fünf sein kann, wobei die Zahl aber größer oder gleich zwei ist.

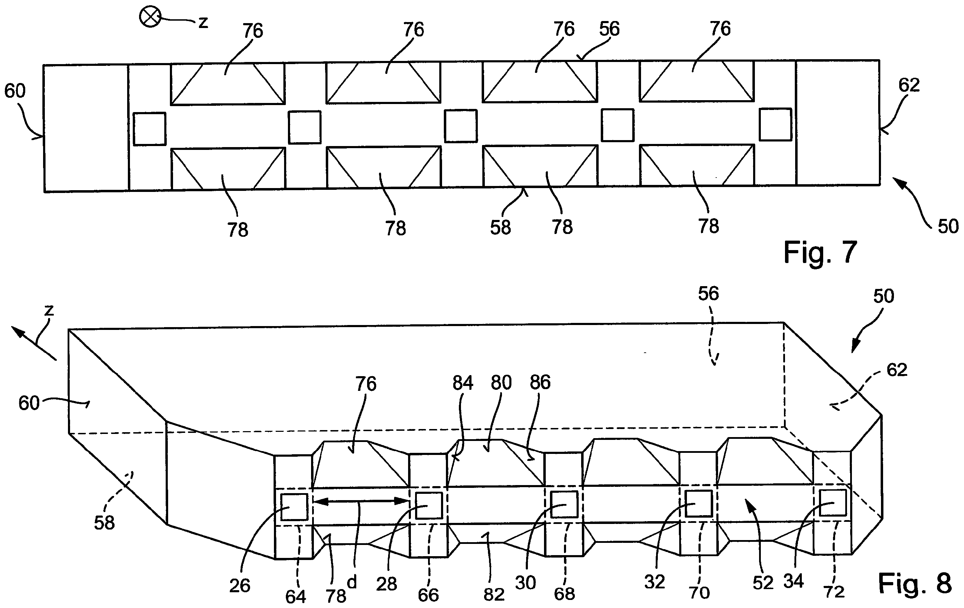

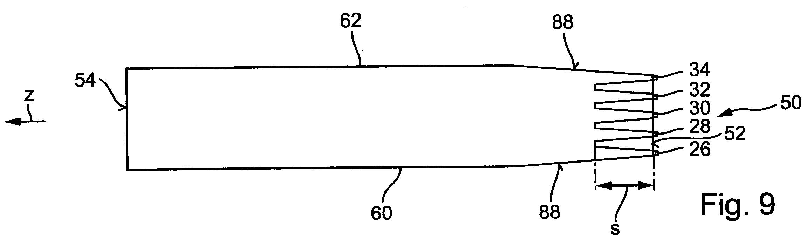

Figur 7 zeigt denselben flächigen Lichtleiter 50 mit senkrechtem Blick auf dessen Lichteintrittsfläche. Figur 8 zeigt denselben flächigen Lichtleiter 50 in leicht geneigter Form und Figur 9 zeigt eine Draufsicht auf den flächigen Lichtleiter 50.

Im Einzelnen zeigen diese Figuren 7, 8 und 9 einen flächigen Lichtleiter 50, der durch eine Lichteintrittsfläche 52, eine Lichtaustrittsfläche 54, eine erste Grund- oder Deckfläche 56, eine zweite Grund- oder Deckfläche 58 und zwei Seitenflächen 60, 62 begrenzt wird, wobei die Lichteintrittsfläche 52 mehrere Teilflächen 64, 66, 68, 70, 72 aufweist, von denen jede dazu eingerichtet ist, Licht einer zugeordneten Halbleiterlichtquelle 26, 28, 30, 32, 34 in den flächigen Lichtleiter 50 einzukoppeln und die durch Abstände d voneinander getrennt in einer Reihe nebeneinander zwischen den zwei Seitenflächen 60, 62 und jeweils einzeln zwischen der ersten Grund- oder Deckfläche 56 und der zweiten Grund- oder Deckfläche 58 angeordnet sind, wobei Flächen 74 von parallel zur Lichteintrittsfläche 52 angeordneten Querschnitten des flächigen Lichtleiters 50 mit zunehmendem Abstand von der Lichteintrittsfläche 52 größer werden. Ein Beispiel einer solchen Fläche 74 ist gestrichelt in der Figur 6 dargestellt.

Im Vergleich zu dem Gegenstand der Fig. 5 zeichnet sich der flächige Lichtleiter 50 dadurch aus, dass seine Lichteintrittsfläche 52 keine den Zusammenhang der Lichteintrittsfläche 52 zwischen den Teilflächen 64, 66, 68, 70, 72 unterbrechende Einkerbungen aufweist, was insbesondere auch bedeutet, dass die Lichteintrittsfläche 52 keine Einkerbungen zwischen den Teilflächen 64, 66, 68, 70, 72 aufweist, bei denen Flächen in einem Winkel aufeinander stoßen, der kleiner als 90° ist.

Der flächige Lichtleiter 50 weist in der dargestellten Ausgestaltung die Grundform eines rechwinkligen Quaders auf. Ferner weist er sowohl von der ersten Grund- oder Deckfläche 56 als auch von der zweiten Grund- oder Deckfläche 58 aus in das Volumen des flächigen Lichtleiters 50 hineinreichende Einschnitte 76, 78 auf, die in Richtung zu den Grund- oder Deckflächen 56, 58, durch erste, schräg zu den Grund- oder Deckflächen 56, 58 hin ansteigende Flächen 80, 82 und in Richtung zu den Seitenflächen 60, 62 durch zweite, schräg von den Teilflächen 64, 66, 68, 70, 72 weglaufende Flächen 84, 86 begrenzt werden.

Dabei ist bevorzugt, dass die ersten, schräg zu den Grund- oder Deckflächen 56, 58 hin ansteigenden Flächen 80, 82 kontinuierlich ansteigen und stufenlos in eine der Grund- oder Deckflächen 56, 58 übergehen.

Die Fig. 8 zeigt damit insbesondere, dass jeweils zwischen den Halbleiterlichtquellen 26, 28, 30, 32, 34 von oben und unten Einschnitte 76, 78 in die ursprünglich rechteckige Form des flächigen Lichtleiters 52 vorgenommen wurden. Die Einschnitte sind seitlich und oben/unten durch schräge Flächen 84, 86 und 80, 82 begrenzt und so gewählt, dass die ursprüngliche Größe jeder als Einkoppelfläche einer Halbleiterlichtquelle 26, 28, 30, 32, 34 dienenden Teilfläche 64, 66, 68, 70, 72 erhalten bleibt. In einer bevorzugten Ausgestaltung ist diese Teilfläche das im Zusammenhang mit der Fig. 1 erwähnte Quadrat von 2 mm Kantenlänge. Die schräg ansteigenden ersten Flächen 80, 82 laufen nach einer gewissen Strecke s auf der oberen Grund- oder Deckfläche 56, respektive auf der unteren Grund- oder Deckfläche 58 aus und dienen der vertikalen Bündelung, also der Bündelung in einer zu den Seitenflächen 60, 62 parallelen Ebene. Die seitlichen (zweiten) Flächen 84, 86 dienen der horizontalen Bündelung, also der Bündelung in einer zu den Grund- oder Deckflächen 56, 58 parallelen Ebene und weisen in z-Richtung dieselbe Länge s auf wie die ersten schrägen Flächen 80, 82.

Vorteilhaft ist auch Folgendes: Im Einkoppelbereich eines Lichtleiters sind oft störend helle Lichtkegel der Halbleiterlichtquellen sichtbar. Diese werden durch die schrägen Flächen 80, 82, 84, 86, die die Einschnitte 76, 78 begrenzen, zerstückelt und somit unauffälliger.

Ein fiktiver Betrachter, der sich innerhalb des flächigen Lichtleiters 50 unmittelbar hinter der Lichteintrittsfläche 52 befindet, sieht in weiter Entfernung die Lichtaustrittsfläche 54, seitlich davon die gegenüber der z-Richtung nicht abgeschrägten Teile der Seitenflächen 60, 62, die unter großen Blickwinkeln durch die Fokussierung schräg unterbrochen sind.

Welche Fläche ein durch die Lichteintrittsfläche 52 in den flächigen Lichtleiter 50 eintretender Lichtstrahl trifft, hängt von seinem horizontalen Winkel, das heißt, seinem Winkel in einer zu den Grund- oder Deckflächen 56, 58 parallelen Ebene zur z-Richtung, und von seinem vertikalen Winkel, d.h. seinem Winkel in einer zu den Seitenflächen 60, 62 parallelen Ebene zur z-Richtung ab:
Für kleine Winkel trifft der Strahl die Lichtaustrittsfläche 54.

Wachsen die Winkel etwas an, trifft der Strahl entweder eine der Grund- oder Deckflächen 56, 58 oder eine der Seitenflächen 60, 62.

Ist der horizontale Winkel entsprechend groß, der vertikale Winkel jedoch entsprechend klein, so trifft der Strahl auf die in Figur 9 erkennbare lange äußere horizontale Fokussierungsfläche 88. Ist der horizontale entsprechend klein, der vertikale Winkel jedoch entsprechend groß, so trifft der Strahl auf die erste Grund- oder Deckfläche 56 oder die zweite Grund- oder Deckfläche 58 und unterliegt somit keinerlei Fokussierung. Sind beide Winkel groß, so trifft er entweder auf eine vertikale oder auf eine horizontale Fokussierungsfläche, das heißt auf eine der schrägen Flächen 80, 82, 84 oder 86. Natürlich können Strahlen auch mehrfach parallelisiert werden. Insgesamt ergibt sich also Folgendes:
Die Fokussierung erfolgt nach demselben Prinzip, wie es unter Bezug auf die Figur 3 erläutert wurde. Der Unterschied besteht im geschickten Umsortieren der parallelisierenden Flächen 80, 82, 84, 86, 88, sodass eine problemlose Herstellung ermöglicht wird. Dies wird mit etwas kleinerer Wirksamkeit erkauft, wobei die etwas kleinere Wirksamkeit daraus resultiert, dass Strahlen mit kleinen horizontalen Winkeln und großen vertikalen Winkeln keine parallelisierende Reflexion erfahren.

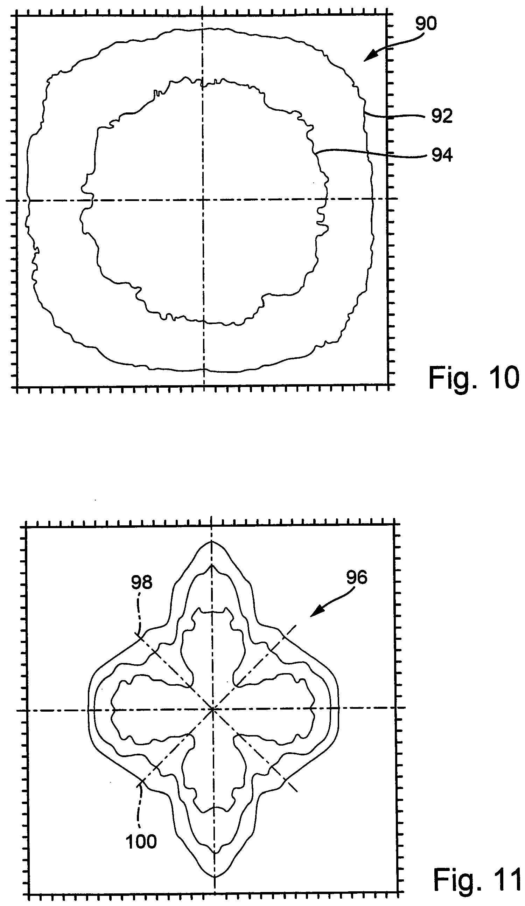

Die Figuren 10-12 zeigen jeweils Isolux-Linien von Lichtverteilungen in einer senkrecht zur z-Achse orientierten Ebene.

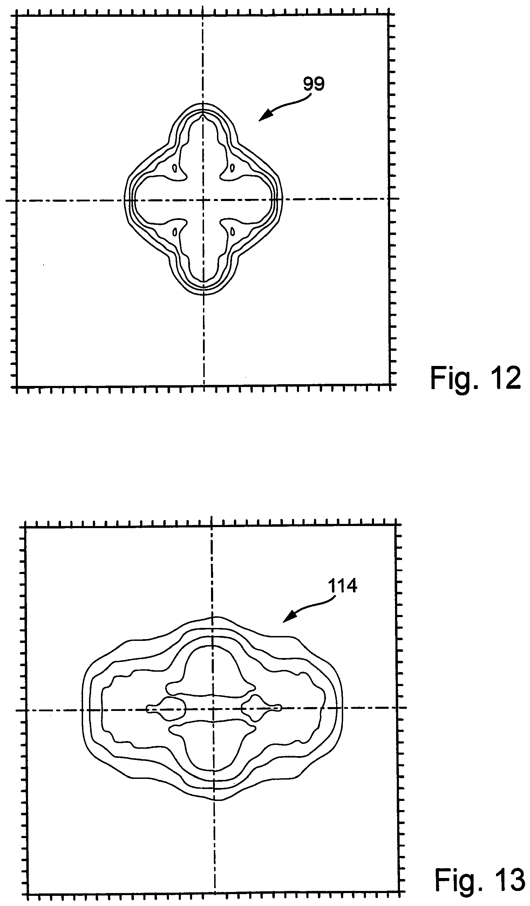

Figur 10 zeigt eine Lichtverteilung 90 eines aus einem flächigen Lichtleiter austretenden Strahlenbündels ohne die oben beschriebene Fokussierung. Die Lichtverteilung 90 entspricht in groben Zügen derjenigen, die eine Leuchtdiode ohne jede optische Beeinflussung abstrahlt. Die weiter außen liegende Linie 92 repräsentiert eine geringere Lichtstärke als die weiter innen liegende Linie 94. Dies gilt analog für die Figuren 11, 12, 13 und 15. Figur 11 zeigt eine Lichtverteilung 96 eines aus dem flächigen Lichtleiter 50 austretenden Strahlenbündels mit der oben beschriebenen Fokussierung. Figur 12 zeigt eine Lichtverteilung 99 von in dem flächigen Lichtleiter 50 propagierendem Licht, aus dem sich nach Brechung an der Lichtaustrittsfläche 54 die Lichtverteilung 96 aus Figur 11 ergibt.
Die Figuren 10 bis 12 demonstrieren damit die Wirksamkeit der Fokussierung durch den oben beschriebenen konkreten flächiger Lichtleiter 50:
Ein Vergleich zwischen den Figuren 10 und 11 zeigt noch einmal die oben anhand einzelner Strahlrichtungen beschriebene Wirkung: Strahlen, die nur einen vertikalen Winkelanteil aufweisen, treffen auf keine Fokussierungsebene, weshalb die Lichtverteilungen 90 und 96 vertikal gleich sind. Strahlen, die nur einen horizontalen Winkelanteil aufweisen, treffen (nur einmal)auf die lange Fokussierungsschräge 88 an Seite 60, 62 des flächigen Lichtleiters 50, weshalb die Lichtverteilung 96 nach der Figur 11 horizontal geringfügig schlanker als die Lichtverteilung 90 nach der Fig. 10. ist: Strahlen, die sowohl horizontale als auch vertikale Winkelanteile aufweisen, treffen in aller Regel mehrfach auf Fokussierungsschrägen, was sich in der Figur 11 in einer sehr starken Fokussierung im Bereich der Diagonalen 98, 100 äußert.

Die bisher beschriebenen Möglichkeiten, die Strahlrichtungsverteilung in dem flächigen Lichtleiter 52 zu beeinflussen, stellen lediglich einen kleinen Ausschnitt aus einer mannigfaltigen Vielfalt dar.

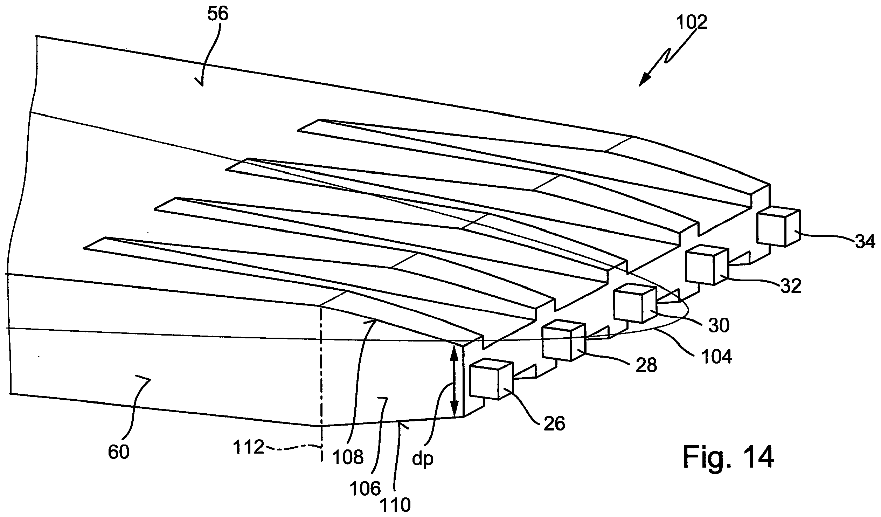

Fig. 14 zeigt eine Ausgestaltung, bei der die Bereiche eines flächigen Lichtleiters 102, die von Strahlen getroffen werden, die ausschließlich oder zum großen Teil vertikale Winkelanteile aufweisen, entlang einer Parabelfläche abgeschnitten worden sind, die man sich durch Verschieben einer Parabelkurve 104 in Richtung der Breite des flächigen Lichtleiters 102 entstanden denken kann. Bei der Ausgestaltung, die in der Fig. 14 dargestellt ist, weisen zwischen den Teilflächen, respektive den Halbleiterlichtquellen 26, 28, 30, 32, 34 und der Grund- oder Deckfläche 56 liegende Volumina des flächigen Lichtleiters 102 parallel zu den Seitenflächen 60 einen Parabelabschnitts-förmigen Querschnitt 106 auf, wobei ein Abstand dp zwischen den Parabelzweigen 108, 110, die den Parabel-Abschnitt 106 begrenzen, mit zunehmendem Abstand von den Teilflächen respektive den Halbleiterlichtquellen 26, 28, 30 32, 34 größer wird.

Wie in der Fig. 14 dargestellt ist geht bei einer bevorzugten Ausgestaltung jeder Parabelzweig stufenlos in eine der Grund- oder Deckflächen 56, 58 über. Bevorzugt ist auch, dass die ersten, schräg zu den Grund- oder Deckflächen 56, 58 hin kontinuierlich ansteigenden und stufenlos in eine der Grund- oder Deckflächen 56, 58 übergehenden Flächen in Richtung einer Normalen der Teilflächen hinter einem Übergang 112 der Parabelzweige in die Grund- oder Deckfläche in die Grund- oder Deckfläche 56, respektive 58, übergehen.

Ein Vergleich zwischen den Figuren 11 und 13 zeigt den Erfolg dieser Maßnahme, der in einer vertikalen Verengung der Lichtverteilung 114 aus der Figur 13 im Vergleich zu der Lichtverteilung 96 aus der Fig. 11 besteht.

Ausgestaltungen erfindungsgemäßer flächiger Lichtleiter besitzen im Raum gekrümmte erste und zweite Plattenflächen. Die ersten Plattenflächen und die zweiten Plattenflächen besitzen, je nach Ausgestaltung, einen konstanten Abstand voneinander oder weisen an verschiedenen Punkten der Lichtleiterplatte verschiedene Werte ihres Abstands auf. In anderen Ausgestaltungen besitzt der flächige Lichtleiter jeweils eine wenigstens bereichsweise ebene erste und zweite Plattenfläche, wobei auch hier gilt, dass der Abstand der ersten von der zweiten Plattenfläche konstant oder vom Punkt der Plattenfläche abhängig verschieden sein kann. In weiteren Ausgestaltungen weist die Lichteintrittsfläche und/oder die Lichtaustrittsfläche einen gekrümmten Verlauf auf. Bevorzugt sind jedoch Ausgestaltungen, bei denen die Einkoppelfläche eben ist, weil dann ebene Platinen, auf denen LED-Module angeordnet sind, in Verbindung mit solchen flächigen Lichtleitern verwendet werden können. Die Eintrittsfläche kann aber durchaus durch gekrümmte Linien begrenzt werden. Solche ebenen Platinen sind preiswerter und bei der Fertigung leichter zu handhaben als flexible Leiterplatten. In anderen Ausgestaltungen können aber auch flexible Leiterplatten verwendet werden, insbesondere dann, wenn gekrümmte Lichteintrittsflächen der flächigen Lichtleiter vorgesehen sind. In bevorzugten Ausgestaltungen sind die benötigten Leuchtdioden und/oder die zur Ansteuerung der Leuchtdioden erforderlichen elektronischen Baugruppen auf den Platinen angeordnet. Dies gilt unabhängig davon, ob es sich um eine ebene und starre Platine oder um eine flexible Platine handelt.

Dabei ist ferner bevorzugt, dass es sich bei den Platinen, insbesondere bei den ebenen Platinen, um Metallkernplatinen handelt. Dabei wird unter einer Metallkernplatine eine Platine verstanden, die einen Schaltungsträger und einen integrierten Kühlkörper zur Abfuhr der bei dem Betrieb der Leuchtdioden und der Steuerelektronik der Leuchtdioden anfallenden elektrischen Verlustleistung aufweist.

## Patentansprüche

1. Flächiger Lichtleiter (50), der durch eine Lichteintrittsfläche (52), eine der Lichteintrittfläche gegenüberliegende Lichtaustrittsfläche (54), eine erste Grund- oder Deckfläche (56), eine zweite der ersten Grund- oder Deckfläche gegenüberliegende Grund- oder Deckfläche (58) und zwei einander gegenüberliegende Seitenflächen (60, 62) begrenzt wird, wobei die Lichteintrittsfläche (52) mehrere Teileinkoppelflächen (64, 66, 68, 70, 72) aufweist, von denen jede dazu eingerichtet ist, Licht einer zugeordneten Halbleiterlichtquelle (26, 28, 30, 32, 34) in den flächigen Lichtleiter (50) einzukoppeln und die durch Abstände (d) voneinander getrennt in einer Reihe nebeneinander zwischen den zwei Seitenflächen (60, 62) und jeweils einzeln zwischen der ersten Grund- oder Deckfläche (56) und der zweiten Grund- oder Deckfläche (58) angeordnet sind, wobei Flächen (74) von parallel zur Lichteintrittsfläche (52) angeordneten Querschnitten des flächigen Lichtleiters (50) mit zunehmendem Abstand von der Lichteintrittsfläche (52) größer werden, wobei die Lichteintrittsfläche (52) keine Einkerbungen zwischen den Teileinkoppelflächen (64, 66, 68, 70, 72) aufweist, bei denen Flächen in einem Winkel aufeinander stoßen, der kleiner als 90° ist, **dadurch gekennzeichnet, dass** die Lichteintrittsfläche (52) keine den Zusammenhang der Lichteintrittsfläche (52) zwischen den Teileinkoppelflächen (64, 66, 68, 70, 72) unterbrechende Einkerbungen aufweist, und wobei der flächige Lichtleiter (50) sowohl von der ersten Grund- oder Deckfläche (56) als auch von der zweiten Grund- oder Deckfläche (58) aus in das Volumen des flächigen Lichtleiters (50) hineinreichende Einschnitte (76, 78) aufweist, die in Richtung zu den Grund- oder Deckflächen (56, 58) durch erste, schräg zu den Grund- oder Deckflächen (56, 58) hin ansteigende Flächen (80, 82) und in Richtung zu den Seitenflächen (60, 62) durch zweite, schräg von den Teileinkoppelflächen (64, 66, 68, 70, 72) weglaufende Flächen (84, 86) begrenzt werden.

2. Flächiger Lichtleiter (50) nach Anspruch 1, **dadurch gekennzeichnet, dass** der flächige Lichtleiter (50) die Grundform eines rechtwinkligen Quaders aufweist.

3. Flächiger Lichtleiter (50) nach einem der Ansprüche 1 oder 2, **dadurch gekennzeichnet, dass** die ersten, schräg zu den Grund- oder Deckflächen (56, 58) hin ansteigenden Flächen (80, 82) kontinuierlich ansteigen und stufenlos in eine der Grund- oder Deckflächen (56, 58) übergehen.

4. Flächiger Lichtleiter (102) nach einem der vorhergehenden Ansprüche, **dadurch gekennzeichnet, dass** zwischen den Teileinkoppelflächen (64, 66, 68, 70, 72) und der Grund- oder Deckfläche liegende Volumina des flächigen Lichtleiters (102) parallel zu den Seitenflächen (60, 62) einen Parabelabschnitts-förmigen Querschnitt (106) aufweisen, wobei ein Abstand (dp) zwischen den Parabelzweigen (108, 110), die den Parabel-Abschnitt (106) begrenzen, mit zunehmendem Abstand von den Teileinkoppelflächen (64, 66, 68, 70, 72) größer wird.

5. Flächiger Lichtleiter (102) nach Anspruch 4, **dadurch gekennzeichnet, dass** jeder Parabelzweig (108, 110) stufenlos in eine der Grund- oder Deckflächen (56, 58) übergeht.

6. Flächiger Lichtleiter (102) nach Anspruch 5, **dadurch gekennzeichnet, dass** die ersten, schräg zu den Grund- oder Deckflächen (56, 58) hin kontinuierlich ansteigenden und stufenlos in eine der Grund- oder Deckflächen (56, 58) übergehenden Flächen (80, 82) in Richtung einer Normalen der Teileinkoppelflächen (64, 66, 68, 70, 72) hinter einem Übergang der Parabelzweige (108, 110) in die Grund- oder Deckfläche (56, 58) übergehen.

7. Flächiger Lichtleiter (50; 102; 118) nach einem der vorhergehenden Ansprüche, **dadurch gekennzeichnet, dass** jede Teileinkoppelfläche (64, 66, 68, 70, 72) so groß ist, dass das Licht einer Halbleiterlichtquelle (26, 28, 30, 32, 34), die in einem Abstand von 0,1 bis 0,4 mm vor der Teileinkoppelfläche (64, 66, 68, 70, 72) angeordnet ist, über die Teileinkoppelfläche (64, 66, 68, 70, 72) in den flächigen Lichtleiter (50; 102; 118) eingekoppelt wird, welches auf die von der Teileinkoppelfläche (64, 66, 68, 70, 72) gebildete Schnittfläche eines Kegels einfällt, der von der Mitte der Halbleiterlichtquelle (26, 28, 30, 32, 34) ausgeht und der einen Kegelwinkel von wenigstens 50°, insbesondere wenigstens 60°, insbesondere wenigstens 70° aufweist.

8. Flächiger Lichtleiter (50; 102; 118) nach einem der vorhergehenden Ansprüche, **dadurch gekennzeichnet, dass** jede der Teileinkoppelflächen (64, 66, 68, 70, 72) größer oder gleich einem Quadrat von 2 mm Kantenlänge ist.

## Claims

1. Planar light guide (50) delimited by a light entrance surface (52), a light exit surface (54) opposite the light entrance surface, a first bottom or top surface (56), a second bottom or top surface (58) opposite the first bottom or top surface, and two opposing side surfaces (60, 62), the light entrance surface (52) comprising several partial-coupling surfaces (64, 66, 68, 70, 72), each of which is designed to couple light of an associated semiconductor light source (26, 28, 30, 32, 34) into the planar light guide (50) and which are arranged, separated by gaps (d), in series next to one another between the two side surfaces (60, 62) and in each case individually between the first bottom or top surface (56) and the second bottom or top surface (58), surfaces (74) of cross sections of the planar light guide (50) that are arranged in parallel with the light entrance surface (52) becoming larger with increasing distance from the light entrance surface (52), the light entrance surface (52) having no notches between the partial-coupling surfaces (64, 66, 68, 70, 72) at which surfaces push against one another with an angle smaller than 90°, **characterised in that** the light entrance surface (52) has no notches that break the continuity of the light entrance surface (52) between the partial-coupling surfaces (64, 66, 68, 70, 72), and the planar light guide (50) comprising cut-out regions (76, 78) that reach from both the first bottom or top surface (56) and from the second bottom or top surface (58) into the volume of the planar light guide (50), which cut-out regions are delimited, in the direction of the bottom or top surfaces (56, 58), by first surfaces (80, 82) that rise obliquely towards the bottom or top surfaces (56, 58), and, in the direction of the side surfaces (60, 62), by second surfaces (84, 86) that extend obliquely away from the partial-coupling surfaces (64, 66, 68, 70, 72).

2. Planar light guide (50) according to claim 1, **characterised in that** the planar light guide (50) has the basic shape of a rectangular cuboid.

3. Planar light guide (50) according to claim 1 or claim 2, **characterised in that** the first surfaces (80, 82), which rise obliquely towards the bottom or top surfaces (56, 58), rise continuously and transition smoothly into one of the bottom or top surfaces (56, 58).

4. Planar light guide (102) according to any of the preceding claims, **characterised in that** volumes of the planar light guide (102) located between the partial-coupling surfaces (64, 66, 68, 70, 72) and the bottom or top surface have a cross section (106) in the shape of a parabola segment parallel to the side surfaces (60, 62), a gap (dp) between the parabola branches (108, 110), which delimit the parabola segment (106), becoming larger with increasing distance from the partial-coupling surfaces (64, 66, 68, 70, 72).

5. Planar light guide (102) according to claim 4, **characterised in that** each parabola branch (108, 110) transitions smoothly into one of the bottom or top surfaces (56, 58).

6. Planar light guide (102) according to claim 5, **characterised in that** the first surfaces (80, 82), which rise continuously and obliquely towards the bottom or top surfaces (56, 58) and which transition smoothly into one of the bottom or top surfaces (56, 58), transition into the bottom or top surface (56, 58) towards a normal of the partial-coupling surfaces (64, 66, 68, 70, 72) behind a transition of the parabola branches (108, 110).

7. Planar light guide (50; 102; 118) according to any of the preceding claims, **characterised in that** each partial-coupling surface (64, 66, 68, 70, 72) is sufficiently large that the light of a semiconductor light source (26, 28, 30, 32, 34), which is arranged at a distance of from 0.1 to 0.4 mm in front of the partial-coupling surface (64, 66, 68, 70, 72), is coupled into the planar light guide (50; 102; 118) via the partial-coupling surface (64, 66, 68, 70, 72), which light strikes the cut surface, formed by the partial-coupling surface (64, 66, 68, 70, 72), of a cone, which projects from the centre of the semiconductor light source (26, 28, 30, 32, 34) and which has a cone angle of at least 50°, in particular at least 60°, in particular at least 70°.

8. Planar light guide (50; 102; 118) according to any of the preceding claims, **characterised in that** each of the partial-coupling surfaces (64, 66, 68, 70, 72) is larger than or the same size as a square having an edge length of 2 mm.

## Revendications

1. Conducteur lumineux plat (50) qui est délimité par une surface d'entrée de lumière (52), une surface de sortie de lumière (54) située en face de la surface d'entrée de lumière, une première surface de fond ou de dessus (56), une seconde surface de fond ou de dessus (58) située en face de la première surface de fond ou de dessus, et deux surfaces latérales (60, 62), l'une en face de l'autre, la surface d'entrée de lumière (52) comprenant plusieurs surfaces partielles d'injection (64, 66, 68, 70, 72) dont chacune est agencée pour injecter de la lumière d'une source de lumière semiconductrice associée (26, 28, 30, 32, 34) dans le conducteur lumineux plat (50) et qui sont disposées, en une ligne les unes à côté des autres et de façon espacée les unes des autres par des espaces (d), entre les deux surfaces latérales (60, 62) et individuellement chacune entre la première surface de fond ou de dessus (56) et la seconde surface de fond ou de dessus (58), des surfaces (74) de coupes transversales du conducteur lumineux plat (50), disposées parallèlement à la surface d'entrée de lumière (52), croissant au fur et à mesure que la distance de la surface d'entrée de lumière (52) augmente, la surface d'entrée de lumière (52) ne présentant pas d'entailles entre les surfaces partielles d'injection (64, 66, 68, 70, 72) où des surfaces se rencontrent sous un angle qui est inférieur à 90°, **caractérisé en ce que** la surface d'entrée de lumière (52) ne présente pas d'entailles qui interrompraient la cohérence de la surface d'entrée de lumière (52) entre les surfaces partielles d'injection (64, 66, 68, 70, 72), et le conducteur lumineux plat (50) comprenant des encoches (76, 78) s'étendant aussi bien de la première surface de fond ou de dessus (56) que de la seconde surface de fond ou de dessus (58) vers l'intérieur du volume du conducteur lumineux plat (50), qui sont délimitées en direction des surfaces de fond ou de dessus (56, 58) par des premières surfaces (80, 82) ascendantes de façon inclinée vers les surfaces de fond ou de dessus (56, 58) et en direction des surfaces latérales (60, 62) par des deuxièmes surfaces (84, 86) s'éloignant de façon inclinée des surfaces partielles d'injection (64, 66, 68, 70, 72).

2. Conducteur lumineux plat (50) selon la revendication 1, **caractérisé en ce que** le conducteur lumineux plat (50) présente la forme générale d'un parallélépipède rectangle.

3. Conducteur lumineux plat (50) selon l'une des revendications 1 ou 2, **caractérisé en ce que** les premières surfaces (80, 82) ascendantes de façon inclinée vers les surfaces de fond ou de dessus (56, 58) montent de façon continue et se raccordent de façon continue à une des surfaces de fond ou de dessus (56, 58).

4. Conducteur lumineux plat (50) selon l'une des revendications précédentes, **caractérisé en ce que** des volumes du conducteur lumineux plat (102) situés entre les surfaces partielles d'injection (64, 66, 68, 70, 72) et la surface de fond ou de dessus présentent, parallèlement aux surfaces latérales (60, 62), une coupe transversale (106) en forme de section de parabole, un espace (dp) entre les branches de parabole (108, 110) qui délimitent la section de parabole (106) croissant au fur et à mesure que la distance des surfaces partielles d'injection (64, 66, 68, 70, 72) augmente.

5. Conducteur lumineux plat (102) selon la revendication 4, **caractérisé en ce que** chaque branche de parabole (108, 110) se raccorde de façon continue à une des surfaces de fond ou de dessus (56, 58).

6. Conducteur lumineux plat (102) selon la revendication 5, **caractérisé en ce que** les premières surfaces (80, 82) ascendantes de façon inclinée vers les surfaces de fond ou de dessus (56, 58), montant de façon continue et se raccordant de façon continue à une des surfaces de fond ou de dessus (56, 58), se raccordent à la surface de fond ou de dessus (56, 58) dans la direction d'une perpendiculaire aux surfaces partielles d'injection (64, 66, 68, 70, 72) après un raccord des branches de paraboles (108, 110).

7. Conducteur lumineux plat (50; 102; 118) selon l'une des revendications précédentes, **caractérisé en ce que** chaque surface partielle d'injection (64, 66, 68, 70, 72) présente des dimensions telles que la lumière d'une source de lumière semiconductrice (26, 28, 30, 32, 34) qui est disposée à une distance de 0,1 à 0,4 mm devant la surface partielle d'injection (64, 66, 68, 70, 72), soit injectée dans le conducteur lumineux plat (50; 102; 118) via la surface partielle d'injection (64, 66, 68, 70, 72), laquelle lumière tombe sur la surface de coupe d'un cône formée par la surface partielle d'injection (64, 66, 68, 70, 72), lequel cône partant du centre de la source de lumière semiconductrice (26, 28, 30, 32, 34) et présentant un angle de cône d'au moins 50°, notamment d'au moins 60°, notamment d'au moins 70°.

8. Conducteur lumineux plat (50; 102; 118) selon l'une des revendications précédentes, **caractérisé en ce que** chaque surface partielle d'injection (64, 66, 68, 70, 72) est plus grande ou égal à un carré d'une longueur de côté de 2 mm.
